# FASCICULE DE BREVET EUROPEEN

(11) **EP 1 849 916 B1**
(45) Date de publication et mention de la délivrance du brevet: **28.01.2015**
(21) Numéro de dépôt: 07300976.3
(22) Date de dépôt: 24.04.2007
(51) Int. Cl.: E01C 7/08, C04B 20/00, C04B 26/02, C04B 26/26

(54) **Composition pour couches supérieures de chaussées à propriétés anti-bruit**
Zusammensetzung für Decklagen von Strassen mit geräuschdämpfenden Eigenschaften
Composition for the upper layers of pavements having anti-noise properties

(30) Priorité: 25.04.2006 FR 0651465
(43) Date de publication de la demande: 31.10.2007
(73) Titulaire: COLAS, 92100 Boulogne-Billancourt (FR)
(72) Inventeur: GAL, Jean-François, 78180, MONTIGNY LE BRETONNEUX (FR); GAUTIER, Jean-Luc, 78280, GUYANCOURT (FR); CHAPPAT, Michel, 78310, MAUREPAS (FR)
(74) Mandataire: Catherine, Alain

(56) Documents cités:
- EP-A- 0 381 903
- EP-A- 0 545 857
- WO-A-99/10434
- DE-A1- 19 757 746
- FR-A1- 2 852 031

## Description

La présente invention concerne des compositions de couches supérieures de chaussées qui permettent une réduction très sensible des bruits générés par le trafic, que ce soit en milieu rural ou urbain, ainsi que leur procédé de préparation.

Il existe actuellement sur le marché des revêtements routiers de type enrobés bitumineux dits « anti-bruit », ou encore « peu bruyants », « acoustiques », ou « à faible bruit de roulement », particulièrement utiles en zone habitée. On citera à titre d'exemple les revêtements à base de bétons bitumineux très minces (BBTM), faisant l'objet de la norme XP P98-137, et les bétons bitumineux drainants (BBDr) faisant l'objet de la norme NF P98-134. Un béton bitumineux est défini comme un enrobé comprenant des particules minérales solidarisées entre elles par un liant bitumineux. Il est destiné préférentiellement à la couche de roulement ou de liaison d'une chaussée.

On peut citer également tous les produits spéciaux d'entreprises routières dérivés de ces deux types de revêtements en y incorporant des additifs destinés à accentuer leur absorption sonore ou réduire le bruit de contact pneumatique/chaussée. A titre d'exemples de tels additifs, on peut citer les granulats naturels ou artificiels à forte porosité intrinsèque et les poudres ou granules de caoutchouc.

Tous ces enrobés bitumineux ont comme particularité d'être composés d'un mélange granulaire ayant une granularité présentant un passant à 2 mm inférieur à 45 % en masse. Le chapitre 6 de chacune des normes XP P98-137 et NF P98-134 précédemment citées spécifie d'ailleurs respectivement un passant à 2 mm compris entre 15 et 35 % en masse pour un BBTM, et un passant à 2 mm inférieur à 20 % en masse pour un BBDr.

La demande WO 99/10434 relate l'existence d'enrobés coulés à froid obtenus selon la technique Ralumac®. Leur composition granulaire, représentée notamment sur la figure 1A, présente une proportion de passant à 3,35 mm allant de 52 à 76% en masse, à 2,36 mm allant de 45 à 63% en masse, à 1 mm allant de 25 à 45 % en masse et à 0,09 mm allant de 6 à 12% en masse. Les différents matériaux décrits dans la demande WO 99/10434 ne sont pas présentés comme étant des revêtements routiers antibruit.

Par ailleurs, tous les revêtements anti-bruit actuels font appel pour leur composition granulaire à un mélange de différentes coupures normalisées. Les classes granulaires (d/D) des constituants de ces enrobés faisant l'objet de la série de normes produits français NF P98-à NF P98-141 sont les suivantes : 0/2, 0/4, 2/4, 0/6,3, 2/6,3, 4/6,3, 2/10, 4/10, 6,3/10, 6,3/14, 10/14, 6,3/20, 10/20 et 14/20. Ces classes granulaires s'entendent au sens de la norme XP P18-540, remplacée aujourd'hui par la norme XP P18-545.

C'est le cas notamment des Bétons Bitumineux Très Minces 0/6,3 discontinu 2/4, tels que les enrobés Viaphone^{®} ou Microprene^{®}, qui sont un mélange de particules de classe granulaire 0/2 et de particules de classe granulaire 4/6,3, ces dernières étant largement majoritaires (≥ 70 % en masse).

Or, les présents inventeurs ont trouvé de façon surprenante que l'utilisation d'un mélange granulaire comprenant des constituants appartenant à certaines classes granulaires ne faisant pas partie des classes granulaires normalisées définies ci-dessus conduisait à un résultat d'absorption acoustique optimum.

Ainsi, la présente invention a pour but une composition pour couches supérieures de chaussées dont la granularité du mélange granulaire a été modifiée de façon à minimiser les bruits générés par le trafic routier. Cette composition, lorsqu'elle est destinée à la préparation d'une couche de roulement, doit conduire à une couche dont l'ensemble des performances ou caractéristiques habituellement attendues pour un enrobé de couche de roulement est vérifié, à savoir :
- Une bonne tenue mécanique sous la plupart des trafics,
- Des caractéristiques de surface autorisant une bonne adhérence entre les pneumatiques et la chaussée, notamment par temps humide,
- Une durabilité des performances et caractéristiques ci-dessus, dont celle de réduction du bruit,
- Une recyclabilité dans l'optique du développement durable,
- Un aspect esthétique satisfaisant, et
- Une facilité de mise en oeuvre, tant au niveau de la fabrication que de l'application.

Les buts ci-dessus sont atteints, et c'est ce qui constitue le premier objet de l'invention, par une composition pour couches supérieures de chaussées comprenant un mélange granulaire et au moins un liant, dans laquelle le mélange granulaire vérifie les conditions suivantes :
a) 70 à 100 % en masse des constituants du mélange granulaire ont des dimensions inférieures à 3,15 mm.
b) 45 à 100 % en masse des constituants du mélange granulaire ont des dimensions inférieures à 2 mm.
c) 3 à 20 % en masse des constituants du mélange granulaire ont des dimensions inférieures à 1 mm.
d) 2 à 10 % en masse des constituants du mélange granulaire ont des dimensions inférieures à 0,063 mm.

La présente invention a également pour objets un procédé de préparation de la composition pour couches supérieures de chaussées définie ci-dessus, l'utilisation d'une telle composition pour la réalisation de couches supérieures de chaussées anti-bruit, et une couche supérieure de chaussée anti-bruit à base d'une telle composition.

D'autres caractéristiques, aspects et avantages de l'invention apparaîtront encore plus clairement à la lecture de la description détaillée qui va suivre, ainsi que de l'exemple concret, mais nullement limitatif, destiné à l'illustrer.

Au sens de la présente description, on entend par "granularité" la distribution dimensionnelle des grains d'un mélange granulaire, exprimée comme un pourcentage massique de matériau passant au travers d'un ensemble spécifié de tamis. Par "passant", on entend la fraction d'un mélange granulaire passant à travers le plus petit des tamis utilisés dans la désignation d'une classe granulaire. Ces définitions correspondent à celles des normes XP P18-545 et EN 13043.

Les passants sont obtenus lors de l'essai de détermination de la granularité par analyse granulométrique par tamisage selon la norme EN 933-1.

Une classe granulaire, notée d/D avec d<D, désigne un intervalle de dimensions de particules en termes de dimension inférieure (d) et supérieure (D) de tamis, exprimées en mm.

La dimension d'une particule, et plus généralement d'un constituant d'un mélange granulaire, correspond à son diamètre si ce constituant est de forme sphérique. Si le constituant n'a pas une forme sphérique, sa dimension correspond à la longueur de son axe primaire, c'est-à-dire la plus longue ligne droite qui peut être dessinée entre une extrémité de ce constituant et une extrémité opposée.

La composition pour couches supérieures de chaussées selon l'invention comprend au moins un liant et un mélange granulaire satisfaisant les conditions précitées.

Dans la présente invention, le mélange granulaire comprend un mélange de particules minérales ou "granulats", et optionnellement au moins une charge complémentaire. Ces charges complémentaires peuvent être, sans limitation, des particules de divers polymères, tels que le polyéthylène et divers élastomères, tels que l'EPDM (copolymère éthylène-propylène-diène), le SBR (copolymère styrène-butadiène) ou le BR (polybutadiène) ou divers thermoplastiques, des fibres minérales ou organiques comme par exemple des fibres de verre, de carbone ou de cellulose, des déchets d'origines diverses, notamment des déchets industriels, comme par exemple des poudres et granules de caoutchouc issus du recyclage des pneumatiques, des adjuvants, additions ou ajouts pour béton, et leurs mélanges. Ces charges complémentaires du mélange granulaire apportent aux compositions de l'invention des propriétés particulières correspondant à des besoins spécifiques.

Les particules minérales présentes dans une composition selon l'invention peuvent être, sans limitation, du sable, sablon, gravier, gravillons, pierres broyées, poussières, filler. Ces particules sont de préférence telles que définies dans les normes XP P18-545 et EN 13043, qui définissent notamment leur granularité et leurs propriétés mécaniques. Ainsi, on entend par filler des particules dont au moins 70 % en masse sont de dimensions inférieures à 0,063 mm.

Toutefois, on peut envisager l'utilisation de granulats qui seraient réputés non conformes à la norme XP P18-545.

Les conditions a) à d) présentées ci-dessus doivent être satisfaites non seulement par les granulats, mais également par les diverses charges complémentaires que peut comprendre le mélange granulaire. Toute combinaison de classes granulaires normalisées ou non normalisées peut être employée pour satisfaire ces conditions.

Les présents inventeurs ont mis en évidence l'intérêt d'utiliser la classe granulaire non normalisée 1/2 en forte proportion dans la composition granulaire et l'intérêt de limiter la proportion de constituants dont les dimensions sont inférieures à 1 mm. Les propriétés anti-bruit de la composition selon l'invention sont généralement d'autant meilleures que la proportion de constituants du mélange granulaire dont les dimensions sont inférieures à 1 mm est faible.

Par ailleurs, il est indispensable du point de vue de la cohésion de la couche supérieure de chaussée que le mélange granulaire selon l'invention comprenne une quantité non nulle de constituants ayant des dimensions inférieures à 0,063 mm.

De préférence, le mélange granulaire vérifie les conditions suivantes :
a) 85 à 100 % en masse des constituants du mélange granulaire ont des dimensions inférieures à 3,15 mm.
b) 50 à 80 % en masse des constituants du mélange granulaire ont des dimensions inférieures à 2 mm.
c) 4 à 15 % en masse des constituants du mélange granulaire ont des dimensions inférieures à 1 mm.
d) 3 à 9 % en masse des constituants du mélange granulaire ont des dimensions inférieures à 0,063 mm.

Mieux, le mélange granulaire vérifie les conditions suivantes :
a) 85 à 100 % en masse des constituants du mélange granulaire ont des dimensions inférieures à 3,15 mm.
b) 65 à 75 % en masse des constituants du mélange granulaire ont des dimensions inférieures à 2 mm.
c) 6 à 10 % en masse des constituants du mélange granulaire ont des dimensions inférieures à 1 mm.
d) 4 à 6 % en masse des constituants du mélange granulaire ont des dimensions inférieures à 0,063 mm.

Le liant utilisé dans la présente invention assure une solidarisation entre les différents constituants du mélange granulaire en se solidifiant lors de la mise en oeuvre de la couche supérieure de chaussée, dans laquelle il recouvre partiellement ou totalement lesdits constituants. Il peut éventuellement être utilisé pour coller les constituants du mélange granulaire sur le support sur lequel ils sont répandus. Etant donné que les propriétés anti-bruit tirent principalement leur origine de la granularité particulière du mélange granulaire, les liants utilisables dans l'invention peuvent être de natures très diverses.

Selon un premier mode de réalisation de l'invention, le liant est de nature bitumineuse. Selon ce mode de réalisation, la composition est une composition d'enrobé bitumineux. Au sens de la présente invention, un "liant bitumineux" désigne un composé bitumineux choisi parmi les bitumes purs, modifiés ou leurs mélanges, et susceptible de durcir et de lier entre eux des matériaux granulaires. Le liant bitumineux selon l'invention est généralement un mélange de matières hydrocarbonées naturelles issues de la fraction lourde obtenue lors de la distillation du pétrole, ou provenant de gisements naturels se présentant sous forme solide ou liquide, de densité généralement comprise entre 0,8 et 1,2. Il peut être préparé par toute technique conventionnelle.

Sont admis comme liants bitumineux au sens de l'invention les bitumes purs définis dans la norme NF EN 12591, tels que les bitumes de classe 160/220, 100/150, 70/100, 50/70, 40/60, 35/50, 30/45 ou 20/30, sans limitation. Ces classes normalisées correspondent à des gammes de pénétrabilité à 25 °C déterminées selon la méthode EN 1426 et sont exprimées en 10⁻¹ mm.

Plus avantageusement, les liants bitumineux sont des bitumes modifiés définis dans la norme NF 14023, par exemple les bitumes modifiés par incorporation d'additifs de toute nature tels que des additifs en vue d'améliorer les caractéristiques d'adhésivité ou la tenue mécanique sous trafic élevé ou agressif, ou en vue d'apporter artificiellement les propriétés nécessaires à une mise en émulsion cationique. On peut citer les bitumes améliorés par incorporation de fibres organiques ou minérales, notamment de verre, de carbone ou de cellulose, par incorporation d'élastomères synthétiques ou naturels de type poudre de caoutchouc (polybutadiène, caoutchouc styrène-butadiène ou SBR), copolymères d'éthylène et d'acétate de vinyle (EVA), copolymères statistiques ou à blocs de styrène et de diènes conjugués, par exemple les copolymères à blocs SBS, par incorporation de thermoplastiques tels que par exemple, les polyoléfines (polyéthylène, polypropylène), les polyamides et les polyesters, ou bien par incorporation de résines thermodurcissables telles que les résines époxy (liants bitume/époxy) ou les résines polyuréthanes. Cette liste n'est bien entendu pas limitative. Il est également possible d'utiliser des mélanges de bitumes de différents types.

Selon un deuxième mode de réalisation de l'invention, le liant est d'origine végétale. Ce peut être une résine naturelle ou une résine d'origine végétale modifiée par synthèse. Cette catégorie de liant est intéressante car issue d'agro-ressources qui sont par définition renouvelables. On citera à titre d'exemple les liants décrits dans la demande de brevet FR 2853647 tels que le Végécol^{®} commercialisé par la société Colas.

Selon un troisième mode de réalisation de l'invention, le liant est un liant de nature purement synthétique. Généralement, un tel liant synthétique est de nature organique, préférentiellement de nature polymérique. Il peut être formé d'un matériau thermoplastique, élastomère ou d'un matériau thermodurcissable, c'est à dire réticulable, ou d'un mélange d'un ou plusieurs de ces matériaux. On citera à titre d'exemple un liant polyuréthane ou un liant acrylique.

Selon un quatrième mode de réalisation de l'invention, le liant est un liant de nature hydraulique tel que référencé dans les normes NF P15-108, NF P98-115 et NF EN 197-1. Selon ce mode de réalisation, la composition est une composition de béton de chaussée telle que définie dans les normes NF EN 13877-1 et NF EN 206-1. Au sens de la présente invention, un "liant hydraulique" désigne donc une composition généralement minérale de matières finement broyées, formant par addition d'une quantité appropriée d'eau une pâte liante susceptible de durcir tant sous l'eau que dans l'air et de lier entre eux des matériaux granulaires. Il peut comprendre un ou plusieurs composés choisis parmi un clinker, un laitier, des cendres, ou leurs mélanges, et peut notamment être un ciment.

Bien évidemment, la composition selon l'invention peut comprendre des mélanges de liants appartenant aux différentes catégories citées, c'est-à-dire qu'elle comprend au moins un liant choisi parmi les liants bitumineux, les liants d'origine végétale, les liants de nature purement synthétique et les liants hydrauliques.

Les liants utilisés dans l'invention peuvent comprendre des catalyseurs, notamment des catalyseurs de durcissement de type sels métalliques, et/ou un ou plusieurs agents colorants tels que des pigments minéraux ou des colorants organiques.

Les liants selon les trois premiers modes de réalisation présentés ci-dessus, c'est-à-dire les liants non hydrauliques, peuvent en outre être fluxés par un fluxant ou fluidifiant destiné à abaisser leur viscosité, par exemple un fluxant à base de solvants d'origine pétrolière, pétrochimique ou carbochimique, ou un fluxant à base de matières grasses d'origine naturelle. Ces liants non hydrauliques peuvent éventuellement contenir de 0,5 à 35 % de fluxant, préférentiellement de 0,5 à 10 %, en masse par rapport à la masse totale de liant. Ces liants peuvent être sous forme anhydre ou sous forme d'émulsion selon notamment NF EN 13808, voire un mélange des deux.

Lorsque le liant non hydraulique est utilisé sous forme d'émulsion, l'affinité liant / eau dépend de la tension interfaciale entre ces deux produits. Cette affinité peut être améliorée au moyen d'un tensioactif de type anionique, cationique, zwitterionique ou non ionique, comme par exemple un chlorhydrate d'amine grasse, un sel d'acide gras, un sel d'ammonium quaternaire, un polyoxyde d'éthylène ou des mélanges de ces composés.

Dans le cas où la composition selon l'invention comprend un liant de nature hydraulique, le rapport masse totale de liant / masse totale du mélange granulaire sec va de préférence de 0,05 à 0,25, mieux de 0,1 à 0,2.

Dans le cas où la composition selon l'invention comprend un liant de nature non hydraulique, le mélange granulaire et le(s) liant(s) est (sont) employé(s) dans des quantités telles que le module de richesse de la composition, tel que défini dans la norme NF P98-149, est supérieur ou égal à 3,7. Cette condition garantit la durabilité des performances et caractéristiques habituellement attendues pour un enrobé de couche de roulement sous la plupart des trafics.

L'invention a également pour objet un procédé de préparation d'une composition pour couches supérieures de chaussées ayant des propriétés anti-bruit, comprenant une étape de mélange du liant (ou des liants) et du mélange granulaire définis précédemment.

Dans le cas où le liant est un liant non hydraulique, le procédé comprend de préférence une étape d'enrobage total ou partiel du mélange granulaire par le liant (ou les liants). L'enrobage peut être réalisé à chaud ou à froid, conformément à la norme NF P98-150, délivrant des enrobés dits à chaud ou à froid. Lors de la préparation d'un enrobé à froid, le liant non hydraulique peut avantageusement être mis en émulsion et la technique correspondante porte le nom d'enrobage à l'émulsion. Il est à noter que l'enrobage peut également être réalisé à tiède (procédé non normalisé à ce jour), ou par slurry surfacing tel que défini dans le projet de norme pr EN 12273.

Dans le cas où le liant est un liant hydraulique, le procédé est un procédé de préparation d'une composition de béton de chaussée, qui comprend de préférence une étape de malaxage du mélange granulaire et du liant (ou des liants) avec de l'eau. Ce procédé de préparation étant classique, l'homme du métier déterminera aisément la quantité d'eau nécessaire à la préparation de la composition.

Un autre objet de l'invention est l'utilisation d'une composition telle que définie précédemment pour la réalisation de couches supérieures de chaussées ayant des propriétés anti-bruit. Les compositions de la présente invention sont particulièrement adaptées à une utilisation en zone habitée, où la circulation des véhicules engendre des bruits de circulation qui peuvent être particulièrement nuisibles pour les riverains. Ces bruits répétés ont effectivement des conséquences défavorables sur leur sommeil et leur santé, ils peuvent notamment entraîner des troubles physiologiques affectant la respiration, la pression sanguine et le système nerveux. L'utilisation des compositions de l'invention fournit des couches supérieures de chaussées diminuant les bruits engendrés notamment par les moteurs des véhicules et les bruits de contact pneumatiques/chaussée.

Les compositions de couches supérieures de chaussées de la présente invention permettent notamment la préparation de couches de roulement, de couches de liaison ou de couches de base, telles que définies dans le guide technique Conception et Dimensionnement des Structures de Chaussées du SETRA / LCPC de 1994 et la norme NF P98-150 pour ce qui est des enrobés hydrocarbonés.

Ainsi, par couche de roulement, on entend dans la présente invention la couche de matériaux en contact direct avec les pneumatiques des véhicules. Par couche de liaison, on entend dans la présente invention une couche de matériaux présente entre la couche de roulement et la couche de base, dont le rôle est d'assurer le lien entre celles-ci. Par couche de base, on entend dans la présente invention une couche de matériaux présente en dessous de la couche de roulement et de la couche de liaison, dont le rôle est de répartir les efforts dus aux charges.

La présente invention a pour autre objet une couche supérieure de chaussée à propriétés anti-bruit à base d'au moins une composition pour couches supérieures de chaussées telle que définie précédemment.

L'épaisseur totale de la couche supérieure de chaussée de l'invention est fonction du type d'application et de l'effet d'absorption acoustique recherché. Elle est généralement inférieure ou égale à 60 mm, de préférence inférieure ou égale à 50 mm. La fourchette d'épaisseur optimale pour obtenir une absorption maximale du bruit du trafic routier pour une couche supérieure de chaussée objet de la présente invention est l'intervalle 25 à 45 mm, bornes incluses, plus avantageusement de 30 à 40 mm. Il est à noter que ces gammes d'épaisseurs optimales propres aux revêtements anti-bruit de l'invention sont approximativement deux fois plus larges que celles des compositions des enrobés anti-bruit actuellement connus, ce qui constitue un avantage non négligeable : plus de latitude dans le choix de l'épaisseur d'application d'un revêtement anti-bruit et diminution du risque de moindre réduction du bruit en cas de dispersion importante sur l'épaisseur de mise en oeuvre.

Selon un premier mode de réalisation, la couche supérieure de chaussée de l'invention est une couche de roulement à base d'une composition pour couches supérieures de chaussées telle que définie précédemment. Il s'agit dans ce cas d'un revêtement monocouche et ce mode de réalisation est le mode de réalisation préféré de l'invention.

Selon un second mode de réalisation, la couche supérieure de chaussée de l'invention comprend au moins deux sous-couches superposées, dont une couche de roulement, lesdites sous-couches étant à base d'au moins une composition pour couches supérieures de chaussées telle que définie précédemment. L'une desdites sous-couches peut être une couche de liaison ou une couche de base, l'ordre d'empilement des différentes sous-couches étant parfaitement évident pour l'homme du métier. Ainsi, la couche supérieure de chaussée de l'invention peut comprendre les trois sous-couches suivantes superposées dans cet ordre : une couche de base, une couche de liaison et une couche de roulement, chacune étant formée à partir d'une composition de l'invention.

Les différentes sous-couches de la couche supérieure de chaussée peuvent avoir une composition différente, tant au niveau du liant que du mélange granulaire ou de leur ratio massique, mais toutes sont à base d'une composition de l'invention. L'épaisseur totale du complexe multi-couches anti-bruit ainsi formé reste de préférence inférieure ou égale à 60 mm, mieux inférieure ou égale à 50 mm. Dans ce cas, les sous-couches superposées peuvent avoir des épaisseurs allant de 5 à 45 mm. Ce mode de réalisation permet dans certains cas d'améliorer l'absorption acoustique par rapport à un revêtement monocouche.

De préférence, le mélange granulaire forme avec le liant dans la couche supérieure de chaussée un mélange intime et celle-ci présente une structure poreuse. La granularité particulière des compositions de l'invention conduit, pour des épaisseurs d'application telles que décrites ci-dessus, à des couches supérieures de chaussées ayant un pourcentage de vide préférentiellement supérieur ou égal à 20 % au sens de la norme EN 12697-8 et à une « géométrie » particulière des vides, garants d'une absorption acoustique supérieure à celle de l'ensemble des enrobés anti-bruits connus à ce jour. Dans le cas d'un complexe multi-couches anti-bruit, le pourcentage de vide est préférentiellement supérieur ou égal à 20 % dans chacune des sous-couches. La couche de roulement de la couche supérieure de chaussée de l'invention a de préférence un pourcentage de vide allant de 25 à 30 % au sens de la norme EN 12697-8.

Sans vouloir être limités par une théorie particulière, les inventeurs pensent que les couches supérieures de chaussées de l'invention présentent des vides de petite taille, favorables à une dissipation visqueuse et thermique dans les pores du matériau des mouvements relatifs de l'air occasionnés par l'onde sonore incidente.

Conformément aux buts fixés, l'amélioration des propriétés anti-bruit liée à la mise en oeuvre d'une composition pour couches supérieures de chaussées selon l'invention est obtenue sans réduction des propriétés d'adhérence entre les pneumatiques et la couche de roulement par rapport à celles observées avec les revêtements anti-bruit actuellement connus.

Ainsi, la profondeur moyenne de texture PMT mesurée selon la norme NF EN 13036-1 et le coefficient de frottement au pendule SRT mesuré selon la norme NF EN 13036-4 de la couche de roulement d'une couche supérieure de chaussée selon l'invention sont conformes à ce qui est mesuré sur des Bétons Bitumineux Minces (NF P 98-132), connus pour garantir une adhérence largement satisfaisante des pneumatiques des véhicules sur la chaussée (macro-rugosité PMT au jeune âge > 0,7 mm et rugosité SRT sensiblement égale à 0,9 pour une couche de roulement selon l'invention).

La couche supérieure de chaussée définie ci-dessus peut être préparée selon une technique d'enrobage, c'est-à-dire en utilisant une composition conforme à l'invention préparée par mise en contact des liants hydrauliques ou non hydrauliques avec le mélange granulaire avant application sur le support concerné, ou bien par une technique de répandage (technique de type enduit superficiel d'usure, conformément au guide technique Conception et Dimensionnement des Structures de Chaussées du SETRA / LCPC de 1994 et à la norme NF P98-160), c'est-à-dire par répandage des liants avant ou après le répandage du mélange granulaire sur le support concerné. Le support sur lequel la couche de l'invention est déposée peut éventuellement avoir subi une étape de préparation connue.

La présente invention a pour autres objets une couche de liaison à propriétés anti-bruit à base d'une composition pour couches supérieures de chaussées telle que définie précédemment, et une couche de base à propriétés anti-bruit à base d'une composition pour couches supérieures de chaussées telle que définie précédemment. Ces couches sont telles que définies précédemment dans le cadre d'un complexe multi-couches anti-bruit. En particulier, la couche de base de l'invention et la couche de liaison de l'invention peuvent avoir des épaisseurs allant de 5 à 45 mm.

Différentes caractéristiques et avantages de la présente invention apparaîtront nettement au vu de l'exemple illustratif exposé ci-après. La composition inventive figurant dans l'exemple 1 ne correspond pas nécessairement à une formulation optimale.

### Exemples

Une composition d'enrobé bitumineux pour revêtement routier ayant les compositions massiques reportées dans le tableau 1 ci-après a été réalisée. Les granulats 2/4 et le sable 1/2 utilisés proviennent du concassage de roches alluvionnaires. L'enrobage a été réalisé à chaud (165 °C), en mélangeant le mélange granulaire (sable, granulats 2/4 et filler) et un bitume routier de classe 35/50.

Cette composition présente un passant à 3,15 mm égal à 81 %, un passant à 2 mm égal à 57 %, un passant à 1 mm égal à 7 % et un passant à 0,063 mm égal à 5 %.

**Tableau 1 : Composition selon l'invention (exemple 1).**

| Constituant | Granulats classe 2/4 | Sable classe 1/2 | Filler | Bitume classe 35/50 |
|---|---|---|---|---|
| % massique | 48 | 48 | 4 | 5,7 |

L'enrobé bitumineux de cette composition a été appliqué sur piste d'essais privée pour former une couche de 30 mm d'épaisseur.

Des mesures de bruit en champ proche selon la méthode dite « CPX » ont été effectuées sur le revêtement de l'exemple 1 et sur deux revêtements témoins. Le revêtement témoin de l'exemple 2 est un Béton Bitumineux Très Mince 0/6,3 discontinu 2/4 (XP P98-137), faisant partie des enrobés anti-bruit actuellement connus. Le revêtement témoin de l'exemple 3 est un Béton Bitumineux Semi Grenu (NF P98-130). Le revêtement acoustique de l'exemple 1 se distingue notamment du BBTM de l'exemple 2 par une teneur importante en particules de dimensions comprises entre 1 et 2 mm, une classe granulaire exclue dans la composition de ce BBTM, et un passant à 2 mm important alors qu'il est faible dans les BBTM.

La méthode de mesure fait appel à trois microphones dont deux sont situés à proximité immédiate du pneu arrière d'un véhicule. Les résultats ci-après sont ceux obtenus avec le 3^{ème} microphone dit « LREP » situé à 80 cm à l'arrière du pneu dans son axe et à 15 cm de hauteur par rapport au revêtement. Ce micro présente l'avantage de mesurer à la fois le bruit généré par le contact pneumatique/chaussée et celui non absorbé par le revêtement sur la distance entre les sources de bruit et le micro lui-même. Les résultats de niveau sonore présentés dans le tableau 2 sont donnés pour un véhicule roulant à une vitesse de à 70 km/h et à 20 °C, après correction de température, et sont exprimés en décibels de type A, notés « dB(A) ». La pondération « A » prend en compte l'aspect subjectif de l'oreille humaine qui est moins sensible dans les graves et les aigus.

**Tableau 2 : Comparaison de la capacité d'absorption acoustique de différents revêtements.**

| Couche de chaussée | Exemple 1 | Exemple 2 BBTM (comparatif) | Exemple 3 BBSG (comparatif) |
|---|---|---|---|
| Niveau sonore, en dB(A) | 86 | 89 | 92 |

Sachant qu'une diminution de 3 dB(A) revient à diviser par deux le niveau sonore (variation logarithmique), on comprend tout l'intérêt des compositions objet de la présente invention. Le niveau sonore perçu en utilisant une couche de chaussée selon l'invention est deux fois inférieur à celui mesuré sur un BBTM 0/6,3 discontinu 2/4 et quatre fois inférieur à celui mesuré sur un BBSG, ce qui classe les compositions de revêtements de l'invention parmi les plus performantes du marché.

## Revendications

1. Composition pour couches supérieures de chaussées comprenant un mélange granulaire et au moins un liant, le mélange granulaire vérifiant les conditions suivantes :
a) 70 à 100 % en masse des constituants du mélange granulaire ont des dimensions inférieures à 3,15 mm.
b) 45 à 100 % en masse des constituants du mélange granulaire ont des dimensions inférieures à 2 mm.
c) 3 à 20 % en masse des constituants du mélange granulaire ont des dimensions inférieures à 1 mm.
d) 2 à 10 % en masse des constituants du mélange granulaire ont des dimensions inférieures à 0,063 mm.

2. Composition selon la revendication 1, **caractérisée en ce que** le mélange granulaire comprend des particules minérales et au moins une charge complémentaire choisie parmi des particules de polymères, des fibres minérales ou organiques, des déchets industriels, des adjuvants, additions ou ajouts pour béton.

3. Composition selon l'une quelconque des revendications précédentes, **caractérisée en ce que** le mélange granulaire vérifie les conditions suivantes :
a) 85 à 100 % en masse des constituants du mélange granulaire ont des dimensions inférieures à 3,15 mm.
b) 50 à 80 % en masse des constituants du mélange granulaire ont des dimensions inférieures à 2 mm.
c) 4 à 15 % en masse des constituants du mélange granulaire ont des dimensions inférieures à 1 mm.
d) 3 à 9 % en masse des constituants du mélange granulaire ont des dimensions inférieures à 0,063 mm.

4. Composition selon la revendication 3, **caractérisée en ce que** le mélange granulaire vérifie les conditions suivantes :
a) 85 à 100 % en masse des constituants du mélange granulaire ont des dimensions inférieures à 3,15 mm.
b) 65 à 75 % en masse des constituants du mélange granulaire ont des dimensions inférieures à 2 mm.
c) 6 à 10 % en masse des constituants du mélange granulaire ont des dimensions inférieures à 1 mm.
d) 4 à 6 % en masse des constituants du mélange granulaire ont des dimensions inférieures à 0,063 mm.

5. Composition selon l'une quelconque des revendications précédentes, **caractérisée en ce qu'**elle comprend au moins un liant bitumineux.

6. Composition selon l'une quelconque des revendications précédentes, **caractérisée en ce qu'**elle comprend au moins un liant d'origine végétale et/ou au moins un liant de nature purement synthétique.

7. Composition selon la revendication 5 ou 6, **caractérisée en ce que** son module de richesse, tel que défini dans la norme NF P98-149, est supérieur ou égal à 3,7.

8. Composition selon l'une quelconque des revendications 5 à 7, **caractérisée en ce que** ledit liant est sous forme anhydre ou sous forme d'émulsion.

9. Composition selon l'une quelconque des revendications 1 à 4, **caractérisée en ce qu'**elle comprend au moins un liant de nature hydraulique.

10. Composition selon la revendication 9, **caractérisée en ce que** le rapport masse totale de liant / masse totale du mélange granulaire sec va de 0,05 à 0,25, mieux de 0,1 à 0,2.

11. Procédé de préparation d'une composition pour couches supérieures de chaussées, comprenant :
- une étape de mélange du liant et du mélange granulaire de la composition pour couches supérieures de chaussées telle que définie dans l'une quelconque des revendications précédentes, ou
- une étape d'enrobage total ou partiel du mélange granulaire par le liant de la composition pour couches supérieures de chaussées telle que définie dans l'une quelconque des revendications 1 à 8, ou
- une étape de malaxage avec de l'eau du mélange granulaire et du liant de la composition pour couches supérieures de chaussées telle que définie dans l'une quelconque des revendications 1 à 4, 9 ou 10.

12. Procédé selon la revendication 11, comprenant une étape d'enrobage total ou partiel du mélange granulaire par le liant, l'enrobage étant réalisé à chaud, à froid ou par slurry surfacing.

13. Utilisation d'une composition selon l'une quelconque des revendications 1 à 10 pour la réalisation de couches supérieures de chaussées ayant des propriétés anti-bruit.

14. Couche supérieure de chaussée à propriétés anti-bruit à base d'au moins une composition selon l'une quelconque des revendications 1 à 10.

15. Couche supérieure de chaussée selon la revendication 14, ayant une épaisseur totale inférieure ou égale à 60 mm, de préférence inférieure ou égale à 50 mm, mieux allant de 25 à 45 mm et encore mieux allant de 30 à 40 mm.

16. Couche supérieure de chaussée selon la revendication 15, ayant un pourcentage de vide supérieur ou égal à 20 % au sens de la norme EN 12697-8.

17. Couche supérieure de chaussée selon l'une quelconque des revendications 14 à 16, **caractérisée en ce que** cette couche est une couche de roulement à base d'une composition selon l'une quelconque des revendications 1 à 10.

18. Couche supérieure de chaussée selon l'une quelconque des revendications 14 à 16, **caractérisée en ce qu'**elle comprend au moins deux sous-couches superposées dont une couche de roulement, lesdites sous-couches étant à base d'au moins une composition selon l'une quelconque des revendications 1 à 10.

19. Couche supérieure de chaussée selon la revendication 18, **caractérisée en ce que** l'une desdites sous-couches est une couche de liaison ou une couche de base.

20. Couche supérieure de chaussée selon la revendication 18, **caractérisée en ce qu'**elle comprend les trois sous-couches suivantes superposées dans cet ordre : une couche de base, une couche de liaison et une couche de roulement, lesdites sous-couches étant à base d'au moins une composition selon l'une quelconque des revendications 1 à 10.

21. Couche de liaison à propriétés anti-bruit à base d'une composition selon l'une quelconque des revendications 1 à 10.

22. Couche de base à propriétés anti-bruit à base d'une composition selon l'une quelconque des revendications 1 à 10.

## Patentansprüche

1. Zusammensetzung für Decklagen von Straßen, umfassend ein Granulatgemisch und mindestens ein Bindemittel, wobei das Granulatgemisch die folgenden Bedingungen erfüllt:
a) 70 bis 100 Masse-% der Bestandteile des Granulatgemischs weisen Abmessungen kleiner 3,15 mm auf.
b) 45 bis 100 Masse-% der Bestandteile des Granulatgemischs weisen Abmessungen kleiner 2 mm auf.
c) 3 bis 20 Masse-% der Bestandteile des Granulatgemischs weisen Abmessungen kleiner 1 mm auf.
d) 2 bis 10 Masse-% der Bestandteile des Granulatgemischs weisen Abmessungen kleiner 0,063 mm auf.

2. Zusammensetzung nach Anspruch 1, **dadurch gekennzeichnet, dass** das Granulatgemisch mineralische Partikel und mindestens einen zusätzlichen Füllstoff umfasst, ausgewählt aus Polymerpartikeln, mineralischen oder organischen Fasern, Industrieabfällen, Hilfsstoffen, Zuschlagen oder Zusätzen für Beton.

3. Zusammensetzung nach einem der vorhergehenden Ansprüche, **dadurch gekennzeichnet, dass** das Granulatgemisch die folgenden Bedingungen erfüllt:
a) 85 bis 100 Masse-% der Bestandteile des Granulatgemischs weisen Abmessungen kleiner 3,15 mm auf.
b) 50 bis 80 Masse-% der Bestandteile des Granulatgemischs weisen Abmessungen kleiner 2 mm auf.
c) 4 bis 15 Masse-% der Bestandteile des Granulatgemischs weisen Abmessungen kleiner 1 mm auf.
d) 3 bis 9 Masse-% der Bestandteile des Granulatgemischs weisen Abmessungen kleiner 0,063 mm auf.

4. Zusammensetzung nach Anspruch 3, **dadurch gekennzeichnet, dass** das Granulatgemisch die folgenden Bedingungen erfüllt:
a) 85 bis 100 Masse-% der Bestandteile des Granulatgemischs weisen Abmessungen kleiner 3,15 mm auf.
b) 65 bis 75 Masse-% der Bestandteile des Granulatgemischs weisen Abmessungen kleiner 2 mm auf.
c) 6 bis 10 Masse-% der Bestandteile des Granulatgemischs weisen Abmessungen kleiner 1 mm auf.
d) 4 bis 6 Masse-% der Bestandteile des Granulatgemischs weisen Abmessungen kleiner 0,063 mm auf:

5. Zusammensetzung nach einem der vorhergehenden Ansprüche, **dadurch gekennzeichnet, dass** sie mindestens ein bituminöses Bindemittel umfasst.

6. Zusammensetzung nach einem der vorhergehenden Ansprüche, **dadurch gekennzeichnet, dass** sie mindestens ein Bindemittel pflanzlichen Ursprungs und/oder mindestens ein Bindemittel rein synthetischen Typs umfasst.

7. Zusammensetzung nach Anspruch 5 oder 6, **dadurch gekennzeichnet, dass** ihr "module de richesse" (Modul des Bindemittelgehalts), wie in der französischen Norm NF P98-149 definiert, größer oder gleich 3,7 ist.

8. Zusammensetzung nach einem der Ansprüche 5 bis 7, **dadurch gekennzeichnet, dass** das Bindemittel in wasserfreier Form oder in Form einer Emulsion vorliegt.

9. Zusammensetzung nach einem der Ansprüche 1 bis 4, **dadurch gekennzeichnet, dass** sie mindestens ein Bindemittel hydraulischen Typs umfasst.

10. Zusammensetzung nach Anspruch 9, **dadurch gekennzeichnet, dass** das Gesamtmasseverhältnis von Bindemittel/Gesamtmasse des trockenen Granulatgemischs zwischen 0,05 und 0,25, besser zwischen 0,1 und 0,2 liegt.

11. Verfahren zur Herstellung einer Zusammensetzung für Decklagen von Straßen, umfassend:
- einen Schritt zum Mischen des Bindemittels und des Granulatgemischs der Zusammensetzung für Decklagen von Straßen, wie in einem der vorhergehenden Ansprüche definiert, oder
- einen Schritt zum teilweisen oder vollständigen Beschichten des Granulatgemischs mit dem Bindemittel der Zusammensetzung für Decklagen von Straßen, wie in einem der Ansprüche 1 bis 8 definiert, oder
- einen Schritt zum Verkneten des Granulatgemischs und des Bindemittels der Zusammensetzung für Decklagen von Straßen, wie in einem der Ansprüche 1 bis 4, 9 oder 10 definiert, mit Wasser.

12. Verfahren nach Anspruch 11, umfassend einen Schritt zum vollständigen oder teilweisen Beschichten des Granulatgemischs mit dem Bindemittel, wobei das Beschichten warm, kalt oder durch "Slurry Surfacing" durchgeführt wird.

13. Verwendung einer Zusammensetzung nach einem der Ansprüche 1 bis 10 zur Herstellung von Decklagen von Straßen, die geräuschdämpfende Eigenschaften aufweisen.

14. Straßendecklage mit geräuschdämpfenden Eigenschaften auf der Basis mindestens einer Zusammensetzung nach einem der Ansprüche 1 bis 10.

15. Straßendecklage nach Anspruch 14, die eine Gesamtdicke kleiner oder gleich 60 mm, bevorzugt kleiner oder gleich 50 mm, besser im Bereich von 25 bis 45 mm und noch besser im Bereich von 30 bis 40 mm aufweist.

16. Straßendecklage nach Anspruch 15, die einen prozentualen Hohlraumgehalt größer oder gleich 20 % im Sinne der Norm EN 12697-8 aufweist.

17. Straßendecklage nach einem der Ansprüche 14 bis 16, **dadurch gekennzeichnet, dass** diese Lage eine Verschleißlage auf der Basis einer Zusammensetzung nach einem der Ansprüche 1 bis 10 ist.

18. Straßendecklage nach einem der Ansprüche 14 bis 16, **dadurch gekennzeichnet, dass** sie mindestens zwei übereinanderliegende Unterlagen umfasst, wovon eine eine Verschleißlage ist, wobei die Unterlagen auf mindestens einer Zusammensetzung nach einem der Ansprüche 1 bis 10 basieren.

19. Straßendecklage nach Anspruch 18, **dadurch gekennzeichnet, dass** eine der Unterlagen eine Binderlage oder eine Traglage ist.

20. Straßendecklage nach Anspruch 18, **dadurch gekennzeichnet, dass** sie die drei folgenden, in dieser Reihenfolge übereinander liegenden Unterlagen umfasst: eine Traglage, eine Binderlage und eine Verschleißlage, wobei die Unterlagen auf mindestens einer Zusammensetzung nach einem der Ansprüche 1 bis 10 basieren.

21. Binderlage mit geräuschdämpfenden Eigenschaften auf der Basis einer Zusammensetzung nach einem der Ansprüche 1 bis 10.

22. Traglage mit geräuschdämpfenden Eigenschaften auf der Basis einer Zusammensetzung nach einem der Ansprüche 1 bis 10.

## Claims

1. A composition for the upper layers of a pavement, comprising a granular mixture and at least one binder, said granular mixture satisfying the following conditions:
a) 70 to 100% by weight of the granular mixture components have a particle size of less than 3.15 mm,
b) 45 to 100% by weight of the granular mixture components have a particle size of less than 2 mm,
c) 3 to 20% by weight of the granular mixture components have a particle size of less than 1 mm,
d) 2 to 10% by weight of the granular mixture components have a particle size of less than 0.063 mm.

2. A composition according to claim 1, **characterized in that** said granular mixture comprises mineral particles and at least one complementary filler selected from polymer particles, mineral or organic fibers, industrial wastes, adjuvants, addition products or admixtures for concrete.

3. A composition according to any one of the preceding claims, **characterized in that** the granular mixture satisfies the following conditions:
a) 85 to 100% by weight of the granular mixture components have a particle size of less than 3.15 mm,
b) 50 to 80% by weight of the granular mixture components have a particle size of less than 2 mm,
c) 4 to 15% by weight of the granular mixture components have a particle size of less than 1 mm,
d) 3 to 9% by weight of the granular mixture components have a particle size of less than 0.063 mm.

4. A composition according to claim 3, **characterized in that** the granular mixture satisfies the following conditions:
a) 85 to 100% by weight of the granular mixture components have a particle size of less than 3.15 mm,
b) 65 to 75% by weight of the granular mixture components have a particle size of less than 2 mm,
c) 6 to 10% by weight of the granular mixture components have a particle size of less than 1 mm,
d) 4 to 6% by weight of the granular mixture components have a particle size of less than 0.063 mm.

5. A composition according to any one of the preceding claims, **characterized in that** it comprises at least one bituminous binder.

6. A composition according to any one of the preceding claims, **characterized in that** it comprises at least one binder of vegetal origin and/or at least one binder of purely synthetic nature.

7. A composition according to claim 5 or 6, **characterized in that** the richness modulus thereof, such as defined in the NF P98-149 Standard, is higher than or equal to 3.7.

8. A composition according to any one of claims 5 to 7, **characterized in that** said binder comes as an anhydrous or an emulsion form.

9. A composition according to any one of claims 1 to 4, **characterized in that** it comprises at least one binder of hydraulic nature.

10. A composition according to claim 9, **characterized in that** the ratio of the binder total weight to the dry granular mixture total weight ranges from 0.05 to 0.25, more preferably from 0.1 to 0.2.

11. A method for preparing a composition for the upper layers of a pavement, comprising:
- a step of blending together the binder and the granular mixture of the composition for the upper layers of a pavement such as defined in any one of the preceding claims, or
- a step of fully or partially coating the granular mixture with the binder of the composition for the upper layers of a pavement such as defined in any one of claims 1 to 8, or
- a step of mixing with water the granular mixture and the binder of the composition for the upper layers of a pavement such as defined in any one of claims 1 to 4, 9 or 10.

12. A method according to claim 11, comprising a step of fully or partially coating the granular mixture with the binder, wherein said coating is either a cold or a hot coating or a slurry surfacing.

13. Use of a composition according to any one of claims 1 to 10, for making the upper layers of a pavement having anti-noise properties.

14. An upper layer of a pavement having anti-noise properties, based on at least one composition according to any one of claims 1 to 10.

15. An upper layer of a pavement according to claim 14, having a total thickness which is lower than or equal to 60 mm, preferably lower than or equal to 50 mm, more preferably ranging from 25 to 45 mm, and even more preferably ranging from 30 to 40 mm.

16. An upper layer of a pavement according to claim 15, having a void percentage which is higher than or equal to 20%, such as defined in the EN 12697-8 standard.

17. An upper layer of a pavement according to any one of claims 14 to 16, **characterized in that** such a layer is a wearing course based on a composition according to any one of claims 1 to 10.

18. An upper layer of a pavement according to any one of claims 14 to 16, **characterized in that** it comprises at least two superimposed sub-layers, amongst which a wearing course, said sub-layers being based on at least one composition according to any one of claims 1 to 10.

19. An upper layer of a pavement according to claim 18, **characterized in that** one of said sub-layers is a binder course or a base course.

20. An upper layer of a pavement according to claim 18, **characterized in that** it comprises the three following sub-layers, which are superimposed upon each other in the following order: one base course, one binder course and one wearing course, said sub-layers being based on at least one composition according to any one of claims 1 to 10.

21. A binder course having anti-noise properties based on a composition according to any one of claims 1 to 10.

22. A base course having anti-noise properties based on a composition according to any one of claims 1 to 10.
